# EUROPEAN PATENT APPLICATION

(11) **EP 4 625 229 A1**
(43) Date of publication of application: **01.10.2025**
(21) Application number: 25167513.8
(22) Date of filing: 31.03.2025
(51) Int. Cl.: G06F 21/60, G06F 21/62

(54) **CRYPTOGRAPHIC KEY MANAGEMENT FOR TIME CONTROLLED DATA**

(30) Priority: 29.03.2024 US 202463571981 P; 26.03.2025 US 202519091650
(71) Applicant: Google LLC, Mountain View, CA 94043 (US)
(72) Inventor: BERKMAN, Omer, Mountain VIew, 94043 (US); LAZAROV, David, Mountain VIew, 94043 (US); YUNG, Marcel M. M., Mountain VIew, 94043 (US)
(74) Representative: Crew, Alexander Edward Ross

(57) **Abstract**

Methods and systems for cryptographic key management for time controlled data are provided herein. A request to store a data item associated with a time controlled application at a data structure is received. A time period during which the data item is to be invalidated is determined based on a data access protocol for the time controlled application. A cryptographic key that is pre-generated for a future time period corresponding to the determined time period is identified. The data item is caused to be encrypted using the identified cryptographic key. The encrypted data item is stored at the data structure in accordance with the received request.

## Description

### TECHNICAL FIELD

Aspects and implementations of the present disclosure relate to cryptographic key management for time controlled data.

### BACKGROUND

Some systems may implement data protection policies or protocols, which provide that data of the application is to be destroyed or made otherwise inaccessible after a particular time period. Such policies and protocols can be implemented to ensure security and privacy of the data, and/or users or applications associated with the data. Crypto shredding refers to a technique for effectively destroying data by deleting or overwriting cryptographic keys used to encrypt and/or decrypt the data, rather than directly erasing the data itself.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor to delineate any scope of the particular implementations of the disclosure or any scope of the claims. Its sole purpose is to present some concepts of the disclosure in a simplified form as a prelude to the more detailed description that is presented later.

In some implementations, a method is disclosed for cryptographic key management for time controlled data. The method includes receiving a request to store a data item associated with a time controlled application at a data structure. The method further includes determining a time period during which the data item is to be invalidated based on a data access protocol for the time controlled application. The method further includes identifying a cryptographic key that is pre-generated for a future time period corresponding to the determined time period. The method further includes causing the data item to be encrypted using the identified cryptographic key. The method further includes storing the encrypted data item at the data structure in accordance with the received request.

In some implementations, the method further includes, prior to receiving the request to store the data item, generating a set of cryptographic keys each corresponding to a distinct future time period, where the set of cryptographic keys includes the identified cryptographic key.

In some implementations, generating the set of cryptographic keys includes obtaining one or more outputs of one or more random cryptographic key generator operations. The one or more outputs include the set of cryptographic keys. The method further includes associating each of the set of cryptographic keys with a respective future time period of a set of future time periods.

In some implementations, generating the set of cryptographic keys includes generating a first cryptographic key of the set of cryptographic keys, providing the generated first cryptographic key as an input to a one-way hashing operation, and extracting a second cryptographic key from one or more outputs of the one-way hashing operation.

In some implementations, identifying the cryptographic key that is pre-generated for the future time period corresponding to the determined time period includes determining whether the set of cryptographic keys includes the cryptographic key for the determined time period. The method further includes, responsive to determining that the set of cryptographic keys does not include the cryptographic key for the determined time period, generating an additional cryptographic key corresponding to the determined time period.

In some implementations, determining the time period during which the data item is to be invalidated includes determining one or more characteristics associated with at least one of the received request or the data item. The one or more characteristics include at least one of a data type of the data item, an operation that is to be applied to the data item, a hardware state of a device that provided the request, a software state of the device that provided the request, or a characteristic associated with an account of a user associated with the device that provided the request. The method further includes identifying, based on the data access protocol, the time period defined for invalidation of the data item based on the determined one or more characteristics.

In some implementations, causing the data item to be encrypted using the identified cryptographic key includes providing the data item of the request and an identifier associated with the data item as an input to an encryption engine, and obtaining one or more outputs of the encryption engine. The outputs include the encrypted data item and the encrypted identifier associated with the data item.

In some implementations, storing the encrypted data item at the data structure includes updating an entry of the data structure to include a mapping between the encrypted data item and the encrypted identifier associated with the data item.

In some implementations, the method further includes responsive to determining that the future time period corresponding to the determined time period has expired, erasing the cryptographic key from a memory.

In some implementations, a system is disclosed. The system includes a memory and a set of one or more processing devices coupled to the memory. The set of one or more processing devices is to perform operations including receiving a request to access a data item associated with a time controlled application. The operations further include determining whether the data item of the request is valid or invalid based on a data access protocol for the time controlled application. The operations further include responsive to determining that the data item of the request is valid, identifying a cryptographic key that corresponds to a future time period during which the data item is to be invalidated. The operations further include retrieving the data item from a data structure of the memory, where the data item at the data structure is encrypted based on the identified cryptographic key. The operations further include providing access to the data item based on the identified cryptographic key in accordance with the received request.

In some implementations, the operations further include responsive to determining that the data item of the request is invalid, providing a notification to a client device that transmitted the request, the notification indicating that the data item of the request cannot be accessed.

In some implementations, determining whether the data item of the request is valid or invalid based on the data access protocol includes identifying, based on the data access protocol, an expiration time period for the data item, where the expiration time period indicates a time period during which the data item is to be inaccessible. The operations further include determining whether a current time period during which the request to access the data item is received matches or is subsequent to the expiration time period. The operations further include responsive to determining that the current time period matches or is subsequent to the expiration time period, determining that the data item of the request is invalid.

In some implementations, providing access to the data item based on the identified cryptographic key includes decrypting the data item using the identified cryptographic key and providing the decrypted data item to a client device that transmitted the request.

In some implementations, providing access to the data item based on the identified cryptographic key includes providing the encrypted data item retrieved from the data structure to a client device that transmitted the request for decryption by the client device using the identified cryptographic key.

In some implementations, retrieving the data item from the data structure includes determining an index for the data item stored in the data structure based on the identified cryptographic key. The operations further include identifying an entry of the data structure that includes the data item, and extracting the data item from the identified entry.

In some implementations, the operations further include, responsive to determining that the data item is invalid based on the data access protocol, erasing the identified cryptographic key from a memory.

### BRIEF DESCRIPTION OF DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example system architecture, in accordance with implementations of the present disclosure.
**FIG. 2** is a block diagram that includes an example platform and an example encryption engine, in accordance with implementations of the present disclosure.
**FIG. 3** is a flow diagram of an example method for cryptographic key management for time controlled data, in accordance with implementations of the present disclosure.
**FIG. 4** is a flow diagram of an example method for accessing encrypted data, in accordance with implementations of the present disclosure.
**FIG. 5** illustrates an example predictive system, in accordance with implementations of the present disclosure.
**FIG. 6** is a block diagram illustrating an exemplary computer system, in accordance with implementations of the present disclosure.

### DETAILED DESCRIPTION

Aspects of the present disclosure relate to cryptographic key management for time controlled data. A time controlled application refers to an application in which data can be used or otherwise accessed for a particular time period, and after expiration of the time period, the application is no longer able to access or use the data (e.g., according to a data access protocol of the application). Data of a time controlled application can include data that is received by, generated by, and/or otherwise accessible to the time controlled application, and is referred to as time controlled data herein. Examples, of time controlled applications include, but are not limited to, applications that access data subject to privacy controls or regulations (e.g., General Data Protection Regulation (GDPR)), applications that access data that is sensitive to a user of the application (e.g., medical data, etc.), applications that access data that is subject geographic access regulations, and so forth. As provided herein, data is referred to as "valid data" for the time period during which the application can use or access the data, and is referred to as "expired data" or "invalid data" upon expiration of the time period.

Crypto shredding refers to a technique for irreversibly destroying data by deleting or overwriting the cryptographic keys used to decrypt the data, rather than directly erasing the data itself. While crypto shredding has conventionally been implemented for data of non-time controlled applications (e.g., data that is not subject to an expiration time period, etc.), some systems have applied crypto shredding techniques to data of time controlled applications. For instance, in some systems, time controlled data is encrypted with an cryptographic key that is generated for the time period during which data is obtained by the application (e.g., from a user of the application, from another system and/or another application, etc.). For example, an encryption engine can encrypt each data item obtained within a first time period using a first cryptographic key and can encrypt each data item obtained within a second time period using a second cryptographic key. Some data items obtained during the first time period may still be valid during the second time period (e.g., according to the data access protocol). Prior to destroying the first cryptographic key, the encryption engine decrypts the valid data items using the first cryptographic key and re-encrypts the valid data items using the second cryptographic key. The encryption engine then can destroy the first cryptographic key, making each invalid data item that is still encrypted using the first cryptographic key unusable or inaccessible.

As indicated above, time controlled data may be decrypted and re-encrypted several times after it is obtained by the system, based on the data access protocol for the time controlled application. It can take a significant amount of time and computing resources (e.g., processing cycles, memory space, etc.) to decrypt and re-encrypt time controlled data, where such computing resources are therefore unavailable for other processes of the system. As fewer computing resources are available in the system, an overall efficiency of the system decreases and an overall latency of the system increases.

Embodiments of the present disclosure address the above and other deficiencies by providing techniques for cryptographic key management for time controlled data. In some embodiments, a system can generate a set of cryptographic keys that each correspond to a future time period. Each of the set of cryptographic keys are to be used to encrypt and/or decrypt data (e.g., of a time controlled application) that is to expire or be invalidated during the respective future time period (e.g., based on a data access protocol of the time controlled application). For example, the set of cryptographic keys can include a first cryptographic key that is to be used to encrypt/decrypt data scheduled to expire or be invalidated during a first future time period, a second cryptographic key to be used to encrypt/decrypt data scheduled to expire or be invalidated during a second future time period, and so forth.

As data is obtained by the application and/or the system, the system can determine a future time period during which the data is to expire or to be invalidated based on an expiration time period defined by the data access protocol, in some embodiments. In an illustrative example, the data access protocol can provide that each data item of the application is to expire three hours after the data is obtained. Accordingly, the system can determine that the future time period during which a data item is to expire is a time period three hours after which the data is obtained. Upon determining the future time period during which the data item is to expire or be invalidated, the system can identify a cryptographic key of the set of cryptographic keys that corresponds to the future time period and can encrypt the data item using the identified cryptographic key. Prior to the expiration of the expiration time period for the data item, the system can provide access to the data item based on the cryptographic key used to encrypt the data item, as described herein. In some embodiments, multiple data items of the application can be received/obtained during the same time period and therefore are encrypted using a cryptographic key associated with a common future time period. Upon expiration of the expiration time period for the one or more data items, the one or more data items become invalid data, and the system can delete or overwrite the cryptographic key, thereby making each data item encrypted using the cryptographic key inaccessible and/or unusable.

Aspects and embodiments of the present disclosure enable crypto shredding techniques to be applied for managing access to time controlled data. As described above, each data item of an application is encrypted using a cryptographic key that is generated for a time period during which the data item is to expire or be otherwise inaccessible (e.g., per a data access protocol). Accordingly, such data item is accessible based on the corresponding cryptographic key for the entire time period during which the data item is valid, and the data item is not decrypted and re-encrypted using additional cryptographic keys before the data item expires. As each data item subject to the data access protocol is encrypted based on such corresponding cryptographic key, significantly fewer computing resources (e.g., processing cycles, memory space, etc.) are consumed by the system to encrypt and/or decrypt the data items, making such computing resources available for other processes of the system. As additional computing resources are made available, an overall efficiency of the system is increased and an overall latency of the system is decreased.

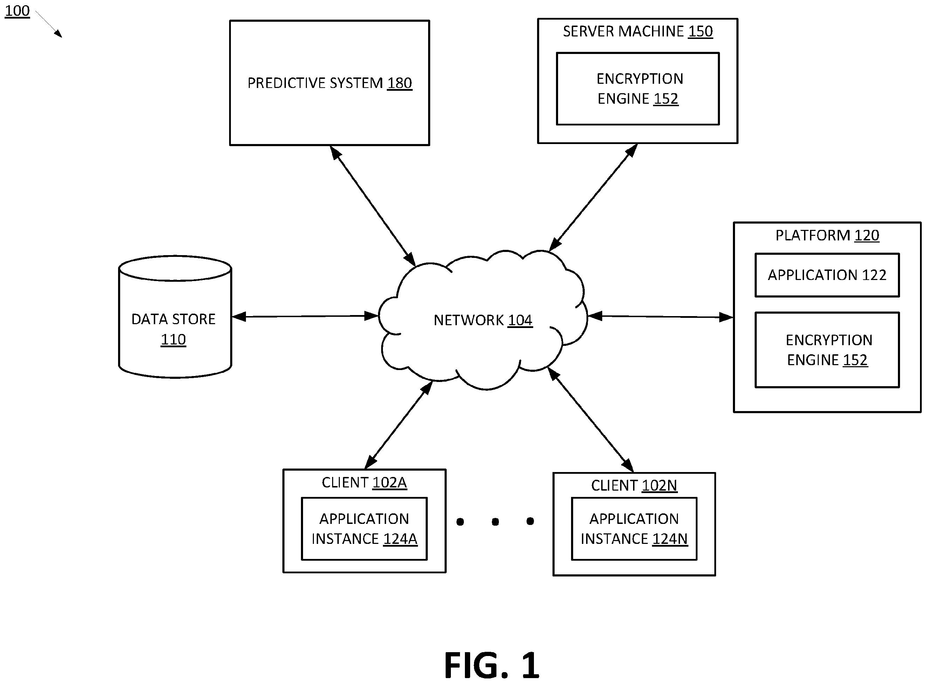

**FIG.** 1 illustrates an example system architecture 100, in accordance with implementations of the present disclosure. The system architecture 100 (also referred to as "system" herein) includes client devices 102A-N (collectively and individually referred to as client device 102 herein), a data store 110, a platform 120, server machine 150, and/or a predictive system 180 each connected to a network 104. In implementations, network 104 can include a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof. In some embodiments, system 100 can be or otherwise include a cloud-based computing environment (also referred to as a "cloud-based environment" herein).

In some implementations, data store 110 is a persistent storage that is capable of storing data as well as data structures to tag, organize, and index the data. Data store 110 can be hosted by one or more storage devices, such as main memory, magnetic or optical storage based disks, tapes or hard drives, NAS, SAN, and so forth. In some implementations, data store 110 can be a network-attached file server, while in other embodiments data store 110 can be some other type of persistent storage such as an object-oriented database, a relational database, and so forth, that may be hosted by platform 120 or one or more different machines coupled to the platform 120 via network 104.

The client devices 102A-N (collectively and individually referred to as client device(s) 102 or client device 102 herein) may each include computing devices such as personal computers (PCs), laptops, mobile phones, smart phones, tablet computers, netbook computers, network-connected televisions, etc. In some implementations, client devices 102A-N may also be referred to as "user devices." Each client device may include a content viewer. In some implementations, a content viewer may be an application that provides a user interface (UI) for users to view or otherwise access data or content, such as images, video items, web pages, documents, etc. For example, the content viewer may be a web browser that can access, retrieve, present, and/or navigate content (e.g., web pages such as Hyper Text Markup Language (HTML) pages, digital media items, etc.) served by a web server. The content viewer may render, display, and/or present the content to a user. The content viewer may also include an embedded media player (e.g., a Flash^{®} player or an HTML5 player) that is embedded in a web page (e.g., a web page that may provide information about a product sold by an online merchant). In another example, the content viewer may be a standalone application (e.g., a mobile application or app) that allows users to view digital media items (e.g., digital video items, digital images, electronic books, etc.).

In some embodiments, system 100 may include a platform 120. Platform 120 can be configured to manage communications between client devices 102 and/or can provide one or more applications 122 for access by client devices 102. Platform 120 can include, but is not limited to, a document collaboration platform, a content sharing platform, a communication services platform, a SaaS platform, and so forth. Application 122 can provide users with access to tools or resources associated with document collaboration, content sharing, communication, and so forth. It should be noted that some embodiments of the present disclosure are described with respect to a document collaboration platform, a content sharing platform, etc. However, embodiments, of the present disclosure can be applied for any type of platform and/or for any type of application. Embodiments of the present disclosure can also be applied to a system that does not include a platform 120. In such embodiments, application 122 may be provided to client device 102 according to other techniques.

As described above, in some embodiments, platform 120 can provide users with access to application 122. In some embodiments, platform 120 can provide users to access to features or functionalities of application 122 via an application instance 124 running at a client device 102 associated with the user. An application instance 124 refers to a set of processes for an application that are executing using computing resources (e.g., client device 102) associated with a particular user. Each instance 122 of application 121 can provide the same or similar functionality, but can be isolated from other application instances 122. As illustrated in FIG. 1, client device 102A can access the functionality and/or features of application 121 via application instance 122A and client device 102N can access the functionality and/or features of application 121 via application instance 122N.

In some embodiments, application 122 can be or can otherwise correspond to a time controlled application. A time controlled application refers to an application in which data can be used or otherwise accessed for a particular time period, and after expiration of the time period, the application is no longer able to access or use the data. A data access protocol of the application can include or otherwise indicate expiration time periods for data items (e.g., units of data) of the application. An expiration time period refers to an amount of time after which the data item is received or otherwise obtained by the application 122 (and/or platform 120) when the data item is to expire or be invalidated. In some embodiments, the expiration time period of the data access protocol can be applied to each data item of the application 122. For example, the data access protocol can indicate that each data item of the application 122 is to expire or be invalidated within 3 hours after being received/obtained by the application 122. In other or similar embodiments, the data access protocol can indicate distinct expiration time periods for different types of data items. For example, the data access protocol can indicate that data associated with a higher level of sensitivity (e.g., medical data, etc.) has a shorter expiration time period than data associated with a lower level of sensitivity (e.g., non-medical data, etc.). The data access protocol can be provided with the application 122 to platform 120, in some embodiments. For example, a developer associated with platform 120 and/or application 122 can provide information pertaining to the data access protocol as metadata with the application 122. In another example, the data access protocol can be included as part of the application 122 (e.g., as source code for the application 122). In other or similar embodiments, the data access protocol can be associated with the platform 120 and can be applied to each application 122 provided by application 122. In such embodiments, the data access protocol can be provided by a developer or operator of platform 120.

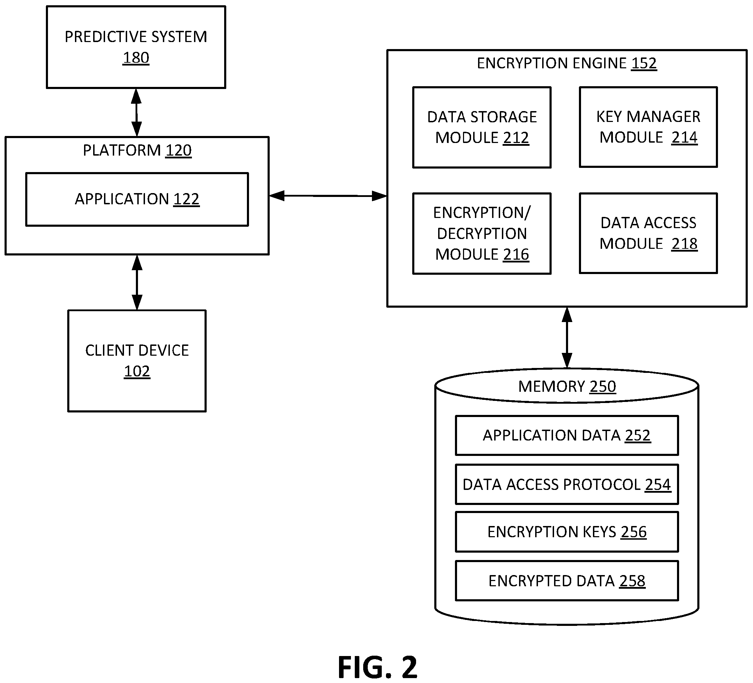

As illustrated in **FIG. 1****,** platform 120 can include an encryption engine 152, which can be configured to encrypt data of application 122. As described herein, data of application 122 can include any data that is received, generated, and/or otherwise obtained by application 122 and/or an application instance 124. As described herein, encryption engine 152 can generate a set of cryptographic keys that each correspond to a future time period of a time window. The future time periods and/or the time window can be defined by the data access protocol, in some embodiments. In other or similar embodiments, the future time periods and/or the time window can be provided by a developer or operator of platform 120. Platform 120 can obtain data of application 122, as described herein, and upon obtaining the data, encryption engine 152 can determine a future time period during which the data is to expire or be invalidated (e.g., per the data access protocol). Encryption engine 152 can identify a cryptographic key, of the set of cryptographic keys, corresponding to the determined future time period and can encrypt the data using the identified cryptographic key. In some embodiments, encryption engine 152 can encrypt multiple data items (e.g., obtained during a common time period) using the identified cryptographic key. Upon determination that the data is expired or to be invalidated (e.g., upon expiration of the expiration time period for the data), encryption engine 152 can delete or overwrite the cryptographic key used to encrypt the data, thereby making the data inaccessible and/or unusable. Further details regarding encryption engine 152 are provided herein with respect to **FIGs. 2-4** below.

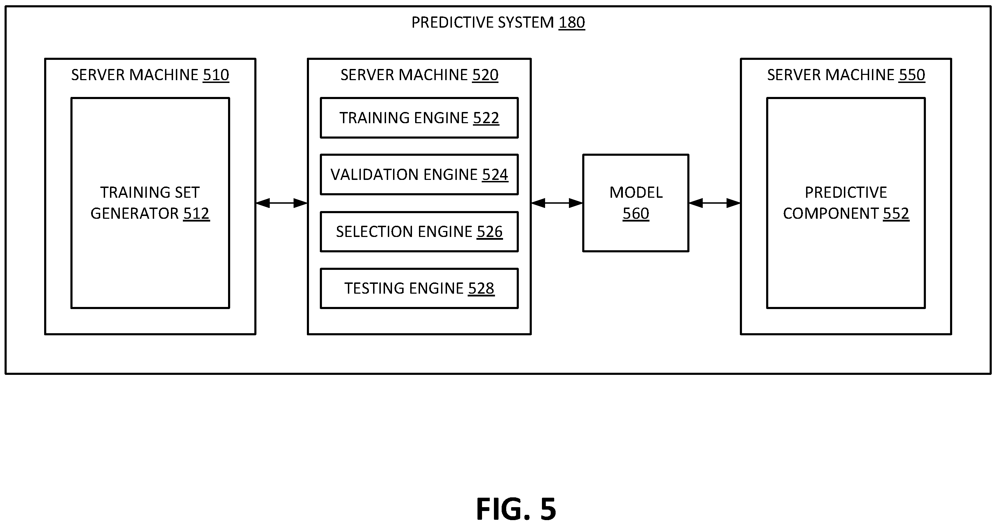

In some embodiments, system 100 can include a predictive system 180. Predictive system 180 implement one or more artificial intelligence (AI) and/or machine learning (ML) techniques to generate or otherwise obtain the set of cryptographic keys used for encrypting data of application 122, as described herein. Further details regarding predictive system 180 are described with respect to **FIG. 5****.**

It should be noted that although **FIG. 1** illustrates encryption engine 152 as part of platform 120, in additional or alternative embodiments, encryption engine 152 can reside on one or more server machines that are remote from platform 120. For example, encryption engine 152 can reside at server machine 150. In other or similar embodiments, encryption engine 152 can reside on one or more client devices 102. Further, although **FIG. 1** illustrates predictive system 180 as remote from platform 120, in additional or alternative embodiments, predictive system 180 can reside on platform 120, server machine(s) 150, client device 102, and/or any other component of system 100. It should be noted that in some other implementations, the functions of platform 120, server machine 150, and/or predictive system(s) 180 can be provided by more or a fewer number of machines. For example, in some implementations, components and/or modules of platform 120, server machine 150, and/or predictive system(s) 180 may be integrated into a single machine, while in other implementations components and/or modules of any of platform 120, server machine 150, and/or predictive system(s) 180 may be integrated into multiple machines. In addition, in some implementations, components and/or modules of server machine 150, and/or predictive system(s) 180 into platform 120.

In general, functions described in implementations as being performed by platform 120, server machine 150, and/or predictive system(s) 180 can also be performed on the client device 102 in other implementations. In addition, the functionality attributed to a particular component can be performed by different or multiple components operating together. Platform 120 can also be accessed as a service provided to other systems or devices through appropriate application programming interfaces, and thus is not limited to use in websites.

In implementations of the disclosure, a "user" can be represented as a single individual. However, other implementations of the disclosure encompass a "user" being an entity controlled by a set of users and/or an automated source. For example, a set of individual users federated as a community in a social network can be considered a "user." Further to the descriptions above, a user may be provided with controls allowing the user to make an election as to both if and when systems, programs, or features described herein may enable collection of user information (e.g., information about a user' s social network, social actions, or activities, profession, a user's preferences, or a user's current location), and if the user is sent content or communications from a server. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over what information is collected about the user, how that information is used, and what information is provided to the user.

**FIG. 2** is a block diagram that includes an example platform 120 and an example encryption engine 152, in accordance with implementations of the present disclosure. As described above, encryption engine 152 can reside at or can otherwise be connected to platform 120 (e.g., using network 104). In some embodiments, platform 120 and/or encryption engine 152 can be connected to memory 250. Memory 250 can correspond to one or more portions of data store 110, in some embodiments. In additional or alternative embodiments, memory 250 can correspond to any memory of, connected to, or accessible by a component of system 100.

As described above, encryption engine 152 can encrypt data associated with an application 122 of platform 120. In some embodiments, application 122 may be a time controlled application, as described above. In such embodiments, encryption engine 152 can encrypt data (e.g., time controlled data) of the time controlled application based on cryptographic keys generated for a time period during which the data is to expire or be invalidated, as described herein.

In some embodiments, application 122 can be provided (e.g., by a developer or operator of platform 120 and/or application 122, by another system or application of or connected to system 100, etc.) for execution via computing resources associated with platform 120. As indicated above, application 122 can be associated with a data access protocol 254 which indicates a time period during which application data 252 of the application is to be valid (e.g., after application data 252 is obtained by application 122) and/or an expiration time period during which application data 252 is to be expired or invalidated. The data access protocol 254 can be provided with the application 122. In other or similar embodiments, the data access protocol 254 can be provided by a developer or operator of platform 120. In some embodiments, data access protocol 254 can be specific to application 122 (e.g., and is not applied to other applications 122 of platform 120). In other or similar embodiments, data access protocol 254 can be applied to multiple applications 122 of platform 120. In yet other or similar embodiments, data access protocol 254 can be applied to one or more types of data 252 of application 122, while data access protocol 254 is not applied to other types of application 252. Further details regarding data access protocol 254 and the application of data access protocol 254 to application data 252 are provided herein.

As described herein, application data 252 can include any data of application 122. Application data 252 is sometimes referred to as a data item or an application data item. It should be noted that embodiments described with respect to application data 252 can also be applied to embodiments described with respect to a data item or application data item, and vice versa.

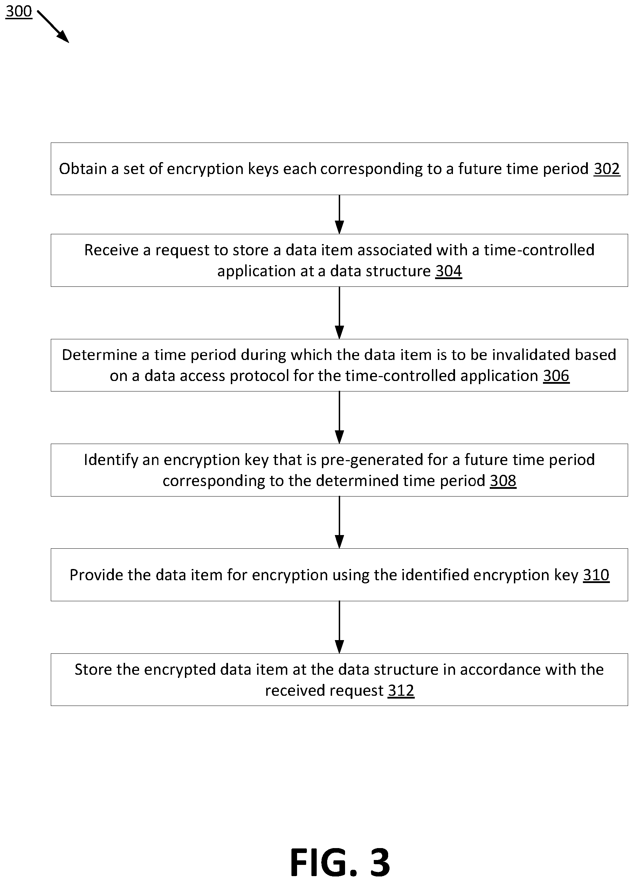

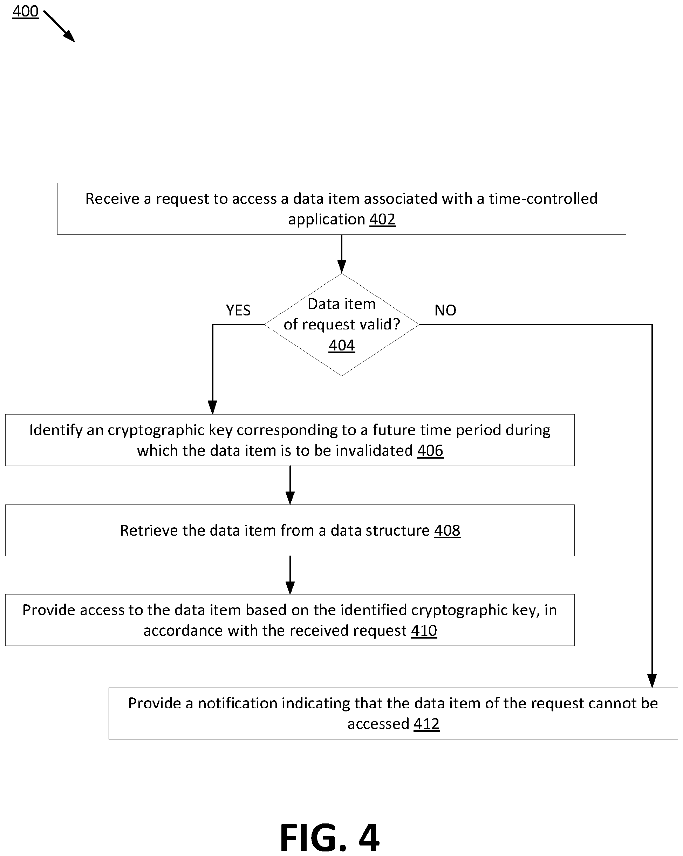

As illustrated in **FIG. 2****,** encryption engine 152 can include at least a data storage module 212, a key manager module 214, an encryption/decryption module 216, and/or a data access module 218. Data storage module 212 may be configured to manage the storage of data 252 (e.g., time controlled data) of application 122 in accordance with a data access protocol 254 of application 122. Key manager module 214 may be configured to generate one or more cryptographic keys 256 for encrypting application data 252 and, in some embodiments, identifying a particular cryptographic key 256 to be used for encrypting an application data item 256, as described herein. Encryption/decryption module 216 can be configured to encrypt and/or decrypt application data 252 using a particular cryptographic key 256, in some embodiments. Data access module 218 can be configured to provide access to application data 252 prior to the expiration of the expiration time period for the application data 252, as provided by data access protocol 254. Further details regarding data storage module 212, key manager module 214, encryption/decryption module 216, and data access module 218 are provided below with respect to **FIGs. 3** and **4** below.

**FIG. 3** is a flow diagram of an example method 300 for cryptographic key management for time controlled data, in accordance with implementations of the present disclosure. Method 300 can be performed by processing logic that can include hardware (circuitry, dedicated logic, etc.), software (e.g., instructions run on a processing device), or a combination thereof. In one implementation, some or all of the operations of method 300 can be performed by one or more components of system 100 of **FIG. 1****.** In some embodiments, method 300 can be performed by encryption engine 152, as described herein.

At block 302, processing logic obtains a set of cryptographic keys each corresponding to a future time period. In some embodiments, the set of cryptographic keys can be obtained by key manager module 214 of encryption engine 152. A cryptographic key refers to a key or other piece of information that can be used to encode and/or decode data such to make the data inaccessible without application of the cryptographic key. Cryptographic keys can include asymmetric keys and/or symmetric keys. In some embodiments, cryptographic keys can include, but are not limited to, private signature keys, public signature verification keys, symmetric authentication keys, private authentication keys, public authentication keys, symmetric data cryptographic keys, symmetric key wrapping keys, symmetric and/or asymmetric random number generation keys, symmetric master keys, private key transport keys, public key transport keys, symmetric key agreement keys, private static key agreement keys, public static key agreement keys, private ephemeral key agreement keys, public ephemeral key agreement keys, symmetric authorization keys, private authorization keys, public authorization keys, and so forth. In some embodiments, each cryptographic key can have the same fixed size (e.g., as specified by data access protocol 254).

As described above, each of the set of cryptographic keys can correspond to a future time period of a future time window. The future time window can be indicated by data access protocol 254 of application 122, in some embodiments. In other or similar embodiments, the future time window can be provided by a developer or operator of platform 120 and/or system 100. The length of the future time window can be a multiple of the length of the future time periods, in some embodiments. For example, a future time period can have a length of approximately one hour, where the future time window can have a length of approximately 24 hours. In such example, approximately 24 future time periods fit within the future time window, and therefore the set of cryptographic keys can include 24 distinct cryptographic keys. For purposes of example and illustration only, some embodiments and examples of the present disclosure provide that a future time period has a length of approximately one hour and a future time window has a length of approximately 24 hours. However, the future time period and future time window can have any length or duration.

In some embodiments, key manager module 214 can obtain the set of cryptographic keys by generating the set of cryptographic keys. In some embodiments, key manager module 214 can generate the set of cryptographic keys by providing information as an input to a key generation operation and extracting the cryptographic keys from the outputs of the key generation operation. The information provided as input to the operation can include, but is not limited to, an indication of a number of keys to be generated, an indication of a type of keys to be generated, one or more additionally cryptographic keys (e.g., public keys), etc. In some embodiments, the key generation operation can include a random number or a pseudorandom number generator that is configured to generate a random number or a pseudorandom number, respectively. In other or similar embodiments, the key generation operation can include an operation that is configured to generate a private cryptographic key based on a given input public cryptographic key. It should be noted that key manager module 214 can generate the set of cryptographic keys according to any type of key generation technique, in accordance with embodiments of the present disclosure.

In some embodiments, key manager module 214 can obtain the set of cryptographic keys based on one or more outputs of an artificial intelligence (AI) model (e.g., of predictive system 180). As described herein, predictive system 180 can train and/or obtain an AI model that is trained to generate cryptographic keys. In some embodiments, key manager module 214 can provide predictive system 180 a set of security attributes for the set of cryptographic keys (e.g., a type of keys to be generated, a number of keys to be generated, a security rating or score associated with the cryptographic keys, etc.). Predictive system 180 can obtain the set of cryptographic keys based on the provided security attributes and provide the set of cryptographic keys to key manager module 214. Further details regarding predictive system 180 and the key generator AI model are described with respect to **FIG. 5****.**

In yet other or similar embodiments, key manager module 214 can generate a respective cryptographic key for a respective time period by applying a one-way hashing operation to a cryptographic key generated for a prior respective time period. In an illustrative example, key manager module 214 can generate a first cryptographic key for a first time period of a future time window (e.g., for time T0) based on an output of a random number generator. Key manager module 214 can apply a one-way hashing operation to the first cryptographic key to generate the second cryptographic key for the second time period (e.g., for time T1). Such key generation technique can be applied to each key generated for a time period of the future time window. As will be described below in further detail, key manager module 214 can erase or overwrite a cryptographic key for a time period (e.g., upon expiration of the time period). As cryptographic keys for subsequent future time periods are generated based on cryptographic keys for prior future time periods, according to such embodiments, the values of the cryptographic keys for the subsequent future time periods may not be determined (e.g., or easily determined), as the cryptographic keys for the prior future time periods are not stored in memory 250 (or another memory of 100).

In some embodiments, key manager module 214 can obtain the set of cryptographic keys during an initialization period of application 122 (e.g., before and/or as application instance 124 is loaded to client device 102). In other or similar embodiments, key manager module 214 can obtain the set of cryptographic keys during a runtime of application 122. In some embodiments, key manager module 214 can obtain a first set of cryptographic keys for a first time window (e.g., 24 hours) and, at or around expiration of the first time window, can generate a second set of cryptographic keys for a second time window (e.g., a subsequent 24 hours). In an illustrative example, key manager module 214 can obtain cryptographic keys for a first 24 hour time window during an initialization period for application 122. At or around hour 23 of the 24 hour time window, key manager module 214 can determine that the first time window is going to expire. Accordingly, key manager module 214 can obtain the cryptographic keys for the second 24 hour time window (e.g., prior to the expiration of the first time window). It should be noted that key manager module 214 can obtain an updated set of cryptographic keys at any point before, during, or after the expiration of the future time window. The frequency of obtaining the sets of cryptographic keys can be defined by data access protocol 254 and/or be provided as a setting of platform 120 (e.g., by a developer or engineer of platform 120). In other or similar embodiments, the frequency of obtaining the sets of cryptographic keys can be determined by platform 120 based on historical data and/or experimental data.

Upon obtaining the set of cryptographic keys (e.g., from predictive system 180, by generating the cryptographic keys, etc.), key manager module 214 can associate each cryptographic key with a respective future time period of the time window. In some embodiments, key manager module 214 can associate a cryptographic key with a future time period by generating a mapping between the cryptographic key and an indication of the future time period of the future time window. Key manager module 214 can associate the cryptographic key to a respective future time period according to other techniques, in some embodiments. Upon obtaining the set of cryptographic keys and/or associating each cryptographic with a respective future time period, key manager module 214 can store the set of cryptographic keys at memory 250 as cryptographic keys 256.

Referring back to **FIG. 3****,** at block 304, processing logic receives a request to store a data item (e.g., application data 252) associated with a time-controlled application at a data structure. In some embodiments, platform 120 can receive a request from a client device 102 connected to platform 120 via a network (e.g., network 104). Client device 102 can transmit the request upon detecting a user interaction with one or more UI elements of a UI provided to client device 102 (e.g., by platform 120, application 122, application instance 124, etc.), in some embodiments. In other or similar embodiments, client device 102 can transmit the request without detecting the user interaction and/or responsive to application instance 124 executing one or more instructions associated with application 122. In yet other or similar embodiments, platform 120 can receive the request from another application 122 of platform 120, another platform 120 of system 100, and/or another system connected to system 100.

At block 306, processing logic determines a time period during which the data item is to be invalidated based on a data access protocol for the time controlled application. As described above, data access protocol 254 can indicate a time period during which application data 252 is to be valid and/or an expiration time period during which application data 252 is to be expired or invalidated. In some embodiments, data access protocol 254 can indicate that each data item of application 122 is to be valid for a particular amount of time (e.g., three hours). Upon determining that application data 252 is associated with application 122 (e.g., based on the entity that transmitted the request, based on a virtual address associated with the application data 252, etc.), data storage module 212 can determine that the application data 252 is to expire during a future time period that is three hours from a current time period (e.g., when the request of block 304 is received).

In other or similar embodiments, data access protocol 254 can indicate that different types of data are to be valid for different time periods and/or are associated with different expiration time periods. Upon determining that application data 252 is associated with application 122, data storage module 212 can determine one or more characteristics associated with the request and/or the application data 252 of the request and determine a type of the application data 252 based on the determined one or more characteristics. The one or more characteristics can include, but is not limited to, a type of application data 252, an operation that is to be applied to application data 252, a hardware state of a device (e.g., client device 102) that provided the request, a software state of the device (e.g., client device 102) that provided the request, a characteristic associated with an account of a user associated with the device (e.g., client device 102) that provided the request, and so forth. In some embodiments, data storage module 212 can determine the type of application data 252 and/or the operation that is to be applied to application data 252 based on information included in the received request. For example, the request can include the application data 252 that is to be stored and data storage module 212 can evaluate the data 252 to determine the type of the data. In another example, the request can be received by platform 120 based on a function call executed at client device 102 and the request can indicate the function call that triggered the request. In other or similar embodiments, the request can include metadata for the application data 252, which can indicate the type of application data 252 and/or the operation that is to be applied to application data 252. In some embodiments, the metadata included in the request can additionally or alternatively indicate the hardware state of client device 102, the software state of client device 102, and/or an identifier for a user account associated with application data 252. In such embodiments, data storage module 212 can determine such characteristics of the data based on the metadata of the request. Data storage module 212 can determine such characteristics according to other techniques, in some embodiments. For example, the request can include a virtual address that is associated with client device 102 and/or application instance 124 running on client device 102. Data storage module 212 can determine a user account that is associated with the virtual address and can identify the hardware state and/or software state of client device 102 based on the user account.

Upon determining the characteristics of the application data 252, data storage module 212 can determine a type of the application data (e.g., based on information of data access protocol 254). In an illustrative example, the characteristics of application data 252 can indicate that the request was received by platform 120 based on a function call of a portion of application 122 that accesses medical data. Data storage module 212 can determine, based on the data access protocol 254, that medical data is associated with a high degree of security and therefore has an expiration time period of approximately one hour, based on the expiration time periods indicated by the data access protocol 254. Accordingly, data storage module 212 can determine that the application data 252 is to expire during a future time period that is one hour from the current time period.

Referring back to **FIG. 3****,** at block 308, processing logic identifies an cryptographic key that is pre-generated for a future time period corresponding to the determined time period. As described above, key manager module 214 can generate the set of cryptographic keys 256 for each future time period of the future time window. In some embodiments, upon determining the time period during which the data item is to be invalidated, key manager module 214 can determine the cryptographic key of the set of cryptographic keys 256 that is generated for a future time period corresponding to the determined time period. In accordance with the prior illustrative examples, upon determining that the expiration time period for application data 252 is three hours from the current time period, key manager module 214 can identify a cryptographic key 256 that is associated with a future time period that is three hours from the current time period. For purposes of example and illustration only, the cryptographic key that is identified for application data 252 is referred to herein as cryptographic key 256A.

In some embodiments, key manager module 214 may determine that no cryptographic key 256 corresponding to the determined time period is included in the set of cryptographic keys. For example, the expiration time period for the application data 252 may be outside of the future time window for which cryptographic keys 256 were previously generated. In such embodiments, key manager module 214 can generate the cryptographic key for such time period, in accordance with embodiments of the present disclosure, and include the generated cryptographic key 256 with the set of cryptographic keys 256 at memory 250. As described above, upon determining that the initial future time window (e.g., an initial 24 hours) associated with the set of cryptographic keys 256 has expired or is about to expire, key manager module 214 can generate the additional set of cryptographic keys 256 for the additional future time window (e.g., the subsequent 24 hours). In some embodiments, key manager module 214 can parse the set of cryptographic keys 256 to determine whether a cryptographic key 256 has been generated for a future time period included in the additional future time window and, if so, key manager module 214 may not generate an additional cryptographic key 256 for such time period and instead may include such pre-generated cryptographic key 256 in the additional set of cryptographic keys 256.

Referring back to **FIG. 3****,** at block 310, processing logic provides the data item for encryption using the identified cryptographic key. In some embodiments, key manager module 214 can provide the application data 252 and cryptographic key 256A to encryption/decryption module 216. In some embodiments, encryption/decryption module 216 can provide application data 252 and cryptographic key 256A as input to a cryptographic operation that is configured to encrypt and/or decrypt given data based on a given cryptographic key. The cryptographic operation can include any type of cryptographic operation, which includes, but is not limited to, a symmetric cryptographic operation, an asymmetric cryptographic operation, and/or a hash operation. Encryption/decryption module 216 can encrypt application data 252 using cryptographic key 256A according to other techniques (e.g., AI techniques, etc.).

In some embodiments, encryption/decryption module 214 can determine an identifier associated with application data 252 and can encrypt the identifier based on the cryptographic key 256A, as described above. The identifier can include any values or characters that identify application data 252. In some embodiments, the identifier can include a virtual address associated with application data 252. In such embodiments, the identifier can be included in the request received from client device 102, as described above. In other or similar embodiments, encryption/decryption module 214 can generate the identifier (e.g., in accordance with a data storage protocol of platform 120).

Referring back to **FIG. 3****,** at block 312, processing logic stores the encrypted data item at the data structure in accordance with the received request. Data storage module 212 of encryption engine 152 can obtain one or more outputs of the cryptographic operation, which can include encrypted application data 258. Data storage module 212 can extract the encrypted application data 258 from the one or more outputs and can store the encrypted application data 258 at memory 250, in some embodiments. In other or similar embodiments, data storage module 258 can store the encrypted application data 258 at another memory of system 100 (e.g., at a region of memory allocated for client device 102 and/or application instance 124).

In some embodiments, data storage module 212 can store the encrypted identifier with the encrypted application data 258. For example, data storage module 212 can update and entry of a data structure (e.g., of memory 250 and/or of another memory of system 100) to include the encrypted application data 258 in a first field of the entry and the encrypted identifier in a second field of the entry. The encrypted identifier included in the second field of the entry can correspond to an index, which can be used to access the encrypted application data 258, in accordance with embodiments described with respect to **FIG. 4****.** In some embodiments, encrypted application data 258 can be stored with additional data pertaining to the encrypted application data 258. For example, encrypted application data 258 can be stored with a timestamp for the time the data was received and/or stored at memory 250, an indication of the expiration time period for application data 258, and so forth.

As described above, multiple data items of application 122 using the same cryptographic key 256A (e.g., upon determining that such data items are to expire during the same future time period). In some embodiments, data storage module 212 can store the data items encrypted using a common cryptographic key 256A together in the data structure. For example, in some embodiments, data storage module 212 can allocate an initial set of entries of the data structure for storage of data encrypted using a particular cryptographic key (e.g., cryptographic key 256A). Upon encrypting an incoming data item, data storage module 212 can store the encrypted data item and/or additional data pertaining to the encrypted data item in an entry of the set of entries. Once encryption engine 152 begins encrypting application data 252 using a different cryptographic key 256B (e.g., based on the expiration time period for the incoming data), data storage module 212 can identify an additional set of entries for storage of such encrypted data and can deallocate the initial set of entries.

In some embodiments, key manager module 214 can determine that the expiration time period for encrypted application data 258 has expired, according to the data access protocol 254. In such embodiments, key manager module 214 can erase or otherwise overwrite the cryptographic key 256A used to encrypt the encrypted application data 256. Upon erasing or overwriting the cryptographic key 256A, the encrypted application data 258 is inaccessible to application 122, client device 102, and/or application instance 124.

As described above, in some embodiments, key manager module 214 can generate an updated set of cryptographic keys 256 upon determining that the future time window for a prior set of cryptographic keys 256 has expired. In other or similar embodiments, key manager module 214 can generate an updated cryptographic key 256 for a future time period upon erasing or overwriting a previously generated cryptographic key. In an illustrative example, key manager module 214 can generate 24 cryptographic keys 256, each corresponding to a respective time period of a 24 hour future time window. Upon determining that a time period of the 24 hour time window has expired, key manager module 214 can erase or otherwise overwrite the cryptographic key 256 associated with the first time period, as described above. Responsive to erasing and/or overwriting the cryptographic key 256, key manager module 214 can generate a new cryptographic key 256, which corresponds to a subsequent time period outside of the 24 hour time window (e.g., a 25^{th} hour).

In some embodiments, encryption engine 152 can provide the cryptographic key 256A used to encrypt application data 252 to application 122 and/or client device 102. For example, encryption engine 152 can establish a secure communication channel (e.g., a secure network communication channel) with client device 102 and can transmit the cryptographic key 256A to client device 102. In another example, encryption engine 152 can obtain a public key and/or other public cryptographic data associated with the cryptographic key and can transmit the public key and/or other public data to client device 102 (e.g., via the secure communication channel, via network 104, etc.). Client device 102 can obtain the cryptographic key 256A by providing the obtained public key and/or other public cryptographic data as an input to a cryptographic operation (e.g., an asymmetric cryptographic operation). Upon obtaining the cryptographic key 256A, client device 102 can store the key 256A in a region of memory at client device 102 (or at another memory of system 100) that is inaccessible to other devices, in some embodiments.

In some embodiments, application data 252 that was encrypted according to the above described embodiments may be re-encrypted (e.g., if application 122 is accessed or otherwise compromised by malicious actors). In such embodiments, the encrypted application data 258 may be provided as input to a one-time-pad operation, which enables key manager module 214 to reencrypt the application data 258 with an alternative cryptographic key without decrypting the encrypted application data 258. In an illustrative example, a pad value for a cryptographic key can be determined based on cryptographic data (e.g., associated with platform 120, etc.). Application data 252, represented by the value, m, can be encrypted using the cryptographic key, represented by the value k, according to the equation *encₘ* = *m*⊕*pad*(*k*)*.* To reencrypt the application data 258 using a new cryptographic key, represented by value k', key manager module 214 can compute a new pad value based on the following: *pad*(*k, k'*) := *pad*(*k*)⊕*pad*(*k'*)*.* Application data 258 can then be associated with the cryptographic value of *encₘ*⊕*pad*(*k, k'*), which provides the same or similar encryption as if application data 258 was encrypted using the new cryptographic key, k'.

**FIG. 4** is a flow diagram of an example method 400 for accessing encrypted data, in accordance with implementations of the present disclosure. Method 400 can be performed by processing logic that can include hardware (circuitry, dedicated logic, etc.), software (e.g., instructions run on a processing device), or a combination thereof. In one implementation, some or all of the operations of method 400 can be performed by one or more components of system 100 of **FIG. 1****.** In some embodiments, method 400 can be performed by encryption engine 152, as described herein.

At block 402, processing logic receives a request to access a data item associated with a time-controlled application. As described above, the data item can be stored at memory 250 (or another memory of system 100), in accordance with embodiments described above. In some embodiments, the data item is encrypted using a cryptographic key 256 that is associated with an expiration time period of the data item, as indicated by data access protocol 254 for application 122 and/or platform 120. In some embodiments, platform 120 can receive the data access request from a client device 102, which provided the application data 252 for storage. In other or similar embodiments, platform 120 can receive the data access request from another client device 102, another application 122, another platform 120 of system 100, and/or another system connected to system 100.

At block 404, processing logic determines whether the data item of the request is valid or invalid based on a data access protocol for the time controlled application. In some embodiments, the data access request can include metadata indicating a type of the data and/or a function call of the data, as described above. In such embodiments, data access module 218 of encryption engine 152 can determine a type of the data of the request, as described above, and can determine whether the data is valid or invalid based on the data access protocol 254. For example, the data access request can indicate that the data access request was transmitted responsive to execution of a particular function call. The data access protocol 254 can indicate that data invoked by the particular function call is no longer valid, and therefore data access module 218 can determine that the data is invalid.

In other or similar embodiments, data access module 218 can determine whether the encrypted application data 258 is valid based on information stored with the encrypted application data 258 at memory 250. As described above, in some embodiments, data storage module 212 can store with encrypted application data 258 a timestamp indicating a time when the data was received and/or stored. Data access module 218 can compare the time of the timestamp with the expiration time period for application data 252, indicated by data access protocol 254, to determine whether the encrypted application data 258 is valid or invalid. Data access module 218 can determine whether encrypted application data 258 is valid or invalid according to other techniques. For example, data access module 218 can determine that the data is invalid upon attempting to decrypt the data, and finding that the cryptographic key 256A used to encrypt the data item is no longer included in the set of cryptographic keys 256 of memory 250.

Responsive to a determination that the data item of the request is valid, method 400 proceeds to block 406. At block 406, processing logic identifies an cryptographic key corresponding to a future time period during which the data item is to be invalidated. In some embodiments, data access module 218 can determine the expiration time period for the requested data (e.g., based on the metadata of the request) and can identify the cryptographic key of the set of cryptographic keys 256 that corresponds to the expiration time period. In other or similar embodiments, data access module 218 can identify an entry of the data structure at memory 250 (or the other memory of system 100) that includes the encrypted application data 258 of the request and determine that the identified entry is included in a set of entries allocated for storage of data encrypted using a particular cryptographic key. Data access module 218 can identify the particular cryptographic key from the set of cryptographic keys 256, as described above. For purposes of example and illustration only, the cryptographic key identified from the set of cryptographic keys 256 is referred to as cryptographic key 256A.

Referring back to **FIG. 4****,** at block 408, processing logic retrieves the data item from a data structure. In some embodiments, data access module 218 can retrieve the application data 252 from the entry of the data structure included in the set of entries allocated for storage of data encrypted using a particular cryptographic key 256A, as described above. In other or similar embodiments, data access module 218 can determine or otherwise obtain an identifier for the encrypted application data 258 and can retrieve the encrypted application data 258 from the entry of the data structure that includes the identifier. For example, the data access request received by platform 120 can include a virtual memory address for the requested data item. Upon identifying the cryptographic key 256A (e.g., at block 406), encryption/decryption module 216 can encrypt the virtual memory address using the identified cryptographic key, in accordance with previously described embodiments. The encrypted virtual memory address can correspond to the identifier for the encrypted application data 258. Data access module 218 can parse the data structure to identify an entry that includes the identifier for the encrypted application data 258 and, upon identifying the entry, can extract the encrypted application data 258 from the entry. Data access module 218 can determine the identifier for the encrypted application data 258 and/or can retrieve the encrypted application data 258 at data structure according to other techniques, in accordance with embodiment of the present disclosure.

At block 410, processing logic provides access to the data item based on the identified cryptographic key, in accordance with the received request. In some embodiments, data access module 218 can provide the encrypted application data 258 and the identified cryptographic key 256A to encryption/decryption module 216. Encryption/decryption module 216 can provide encrypted application data 258 and the cryptographic key 256A as input to a cryptographic operation and can obtain the decrypted application data (e.g., application data 252) based on one or more outputs of the cryptographic operation, in some embodiments. In other or similar embodiments, encryption/decryption module 216 can decrypt application data 258 according to other techniques (e.g., AI techniques, etc.). Upon decrypting the application data 258, data access module 218 can provide access to the application data 252 to the entity that transmitted the data access request. For example, data access module 218 can transmit the application data 252 to client device 102 (e.g., via a secure channel, via network 104, etc.).

As described above, in some embodiments, encryption engine 152 can provide a client device 102 with an cryptographic key 256 used to encrypt application data 252. In other or similar embodiments, encryption engine 152 can provide the client device with information (e.g., a public key, etc.) that enables the client device 102 to obtain the cryptographic key 256. In such embodiments, data access module 218 can provide the encrypted application data 258 to the client device 102, in accordance with the request (e.g., via network 104, via a secure channel, etc.). Upon receiving the encrypted application data 258, client device 102 can decrypt the encrypted application data 258 using the encrypted key 256, in accordance with embodiments described herein.

Referring back to block 404, responsive to a determination that the data item of the request is invalid, method 400 proceeds to block 412. At block 412, processing logic provides a notification indicating that the data item of the request cannot be accessed. In some embodiments, data access module 218 can transmit the notification to the client device 102, application instance 124, application 122, and/or platform 120 that provided the request to access the application data 252.

As noted above, embodiments of the present disclosure can be applied to any type of application and/or system. In an illustrative example, embodiments of the present disclosure can be applied to protecting communications between client devices 102 and beacon devices. A beacon device refers to a small, wireless transmitter that emits signals that are detectable by nearby client devices (e.g., smart phones, tablets, etc.). In some embodiments, a data access protocol (e.g., data access protocol 254) can provide data of signals detected or otherwise received by a client device 102 can be accessible for 30 days from detection/receipt, after which the data is expired or to be invalidated. Encryption engine 152 can generate cryptographic keys 256 for each time period (e.g., six hour time period) in a future time window of 30 days. As signals are received or detected by client devices 102, data of such signals can be encrypted using the cryptographic key 256 that is associated with a future time window that is 30 days from when the signal is received. Accordingly, such data is only encrypted once (e.g., when the data is received) and decrypted when the data is accessed, within the time window. Upon expiration of the 30 day time window, the cryptographic key 256 can be erased or overwritten, therefore making the data of the signal inaccessible outside of the time window, in accordance with the data access protocol 254.

**FIG. 5** illustrates an example predictive system 180, in accordance with implementations of the present disclosure. In some embodiments, predictive system 180 can be configured to train one or more AI models 560 associated with device management engine 152. For example, predictive system 180 can be configured to train one or more cryptography models 560 to generate cryptographic keys, as described above.

As illustrated in **FIG. 5****,** predictive system 180 can include a training set generator 512 (e.g., residing at server machine 510), a training engine 522, a validation engine 524, a selection engine 526, and/or a testing engine 528 (e.g., each residing at server machine 520), and/or a predictive component 552 (e.g., residing at server machine 550). In accordance with embodiments described herein, predictive component 552 can be a component of or otherwise accessible to platform 120 and/or client devices 102 of system 100. Training set generator 512 may be capable of generating training data (e.g., a set of training inputs and a set of target outputs) to train model 560.

As mentioned above, training set generator 512 can generate training data for training model 560. Training set generator 512 obtain training data for training model 560 and can organize or otherwise group the training data for training model 560 (e.g., according to the purpose of the model). In an illustrative example, training data can include a data set of existing cryptographic keys and an indication of their corresponding security attributes (e.g., degree of randomness of the cryptographic keys, an operation used to generate the cryptographic keys, a security score or rating associated with the cryptographic keys, etc.). In some embodiments, training set generator 512 can organize the training data into a set of training inputs (e.g., indicating the security attributes) and a set of target outputs (e.g., including the existing cryptographic keys) and can generate an input/output mapping between each respective training input and each corresponding target output. It should be noted that training set generator 512 can generate any type of training data sufficient for training an AI model to predict cryptographic keys.

Training engine 522 can train AI model 560 using the training data (e.g., training set T) from training set generator 512. The AI model 560 can refer to the model artifact that is created by the training engine 522 using the training data that includes training inputs and/or corresponding target outputs (correct answers for respective training inputs). The training engine 522 can find patterns in the training data that map the training input to the target output (the answer to be predicted), and provide the AI model 560 that captures these patterns. The AI model 560 can be composed of, e.g., a single level of linear or non-linear operations (e.g., a support vector machine (SVM or may be a deep network, i.e., AI model that is composed of multiple levels of non-linear operations). An example of a deep network is a neural network with one or more hidden layers, and such an AI model may be trained by, for example, adjusting weights of a neural network in accordance with a backpropagation learning algorithm or the like. In one aspect, the training set is obtained by training set generator 512 hosted by server machine 510.

Validation engine 524 may be capable of validating a trained AI model 560 using a corresponding set of features of a validation set from training set generator 512. The validation engine 524 may determine an accuracy of each of the trained AI models 560 based on the corresponding sets of features of the validation set. The validation engine 524 may discard a trained AI model 560 that has an accuracy that does not meet a threshold accuracy. In some embodiments, the selection engine 526 may be capable of selecting a trained AI model 560 that has an accuracy that meets a threshold accuracy. In some embodiments, the selection engine 526 may be capable of selecting the trained AI model 560 that has the highest accuracy of the trained AI models 560.

The testing engine 528 may be capable of testing a trained AI model 560 using a corresponding set of features of a testing set from training set generator 512. For example, a first trained AI model 560 that was trained using a first set of features of the training set may be tested using the first set of features of the testing set. The testing engine 528 may determine a trained AI model 560 that has the highest accuracy of all of the trained AI models based on the testing sets.

Predictive component 552 of server machine 550 may be configured to feed data as input to model 560 and obtain one or more outputs. As described above, a predictive component 552 residing at server machine 550 can be included at or otherwise accessible to encryption engine 152. Predictive component 552 can provide data as input to model 560 and obtain one or more outputs. In some embodiments, the input data can include an indication of a security score or rating sought for and/or characteristics of an cryptographic key to be used according to embodiments of the present disclosure. The one or more outputs can include a cryptographic key and a level of confidence that the cryptographic key is associated with the indicated security score or rating and/or corresponds to the given characteristics of the cryptographic key.

In some embodiments, one or more portions of model 560 can reside at a client device 102 (e.g., owner device 102A). In such embodiments, owner device 102A may obtain the private key based on one or more outputs of model 560, as described above. The portion of model 560 residing at a client device 102 may be discrete and/or remote form other portions of the model 560 residing at other client devices 102 and/or a memory of predictive system 180. In such embodiments, data that is provided as an input and/or obtained as an output of model 560 may not be provided to predictive system 180 and/or other client devices 102. Accordingly, private keys generated for a respective client device 102 may remain at the client device 102 and therefore are not accessible to any other component of system 100.

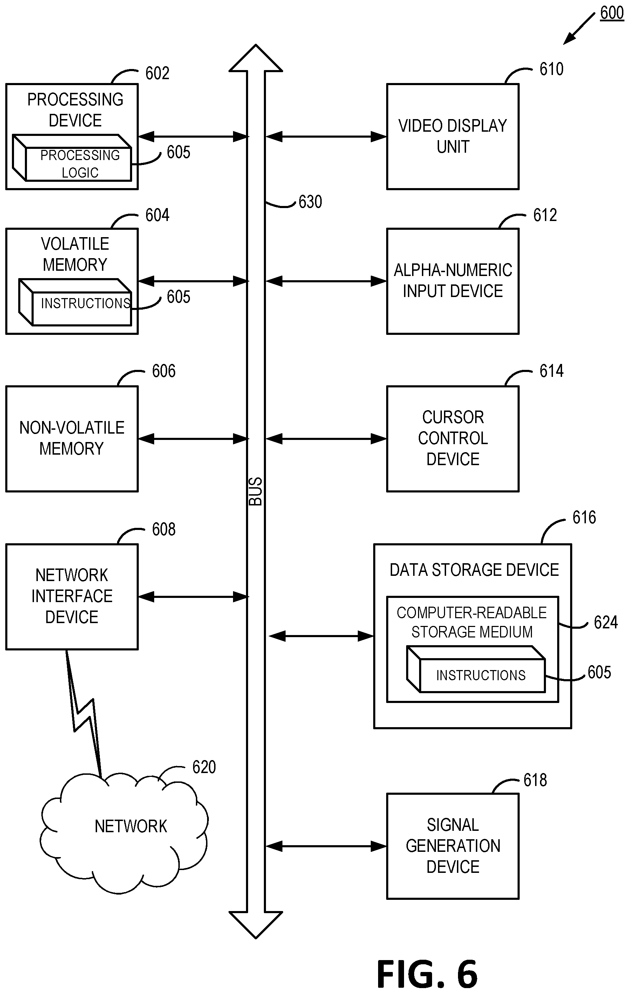

**FIG. 6** is a block diagram illustrating an exemplary computer system 600, in accordance with implementations of the present disclosure. The computer system 600 can correspond to platform 120 and/or client devices 102A-N, described with respect to **FIG. 1****.** Computer system 600 can operate in the capacity of a server or an endpoint machine in endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processing device (processor) 602, a main memory 604 (e.g., read-only memory (ROM), flash memory, dynamic random access memory (DRAM) such as synchronous DRAM (SDRAM), double data rate (DDR SDRAM), or DRAM (RDRAM), etc.), a static memory 606 (e.g., flash memory, static random access memory (SRAM), etc.), and a data storage device 616, which communicate with each other via a bus 630.

Processor (processing device) 602 represents one or more general-purpose processing devices such as a microprocessor, central processing unit, or the like. More particularly, the processor 602 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor 602 can also be one or more special-purpose processing devices such as an application specific integrated circuit (ASIC), a field programmable gate array (FPGA), a digital signal processor (DSP), network processor, or the like. The processor 602 is configured to execute instructions 605 for performing the operations discussed herein.

The computer system 600 can further include a network interface device 608. The computer system 600 also can include a video display unit 610 (e.g., a liquid crystal display (LCD) or a cathode ray tube (CRT)), an input device 612 (e.g., a keyboard, and alphanumeric keyboard, a motion sensing input device, touch screen), a cursor control device 614 (e.g., a mouse), and a signal generation device 618 (e.g., a speaker).

The data storage device 616 can include a non-transitory machine-readable storage medium 624 (also computer-readable storage medium) on which is stored one or more sets of instructions 605 embodying any one or more of the methodologies or functions described herein. The instructions can also reside, completely or at least partially, within the main memory 604 and/or within the processor 602 during execution thereof by the computer system 600, the main memory 604 and the processor 602 also constituting machine-readable storage media. The instructions can further be transmitted or received over a network 620 via the network interface device 608.

In one implementation, the instructions 605 include instructions for providing fine-grained version histories of electronic documents at a platform. While the computer-readable storage medium 624 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," "one embodiment," "an implementation," or "an embodiment," means that a particular feature, structure, or characteristic described in connection with the implementation and/or embodiment is included in at least one implementation and/or embodiment. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interact between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collect data is anonymized prior to performing any analysis to obtain any statistical patterns so that the identity of the user cannot be determined from the collected data.

Further, the present disclosure comprises the following clauses:
Clause 1. A method comprising:
   receiving a request to store a data item associated with a time controlled application at a data structure;
   determining a time period during which the data item is to be invalidated based on a data access protocol for the time controlled application;
   identifying a cryptographic key that is pre-generated for a future time period corresponding to the determined time period;
   causing the data item to be encrypted using the identified cryptographic key; and
   storing the encrypted data item at the data structure in accordance with the received request.
Clause 2. The method of clause 1, further comprising:
   prior to receiving the request to store the data item, generating a plurality of cryptographic keys each corresponding to a distinct future time period, wherein the plurality of cryptographic keys includes the identified cryptographic key.
Clause 3. The method of clause 2, wherein generating the plurality of cryptographic keys comprises:
   obtaining one or more outputs of one or more random cryptographic key generator operations, wherein the one or more outputs comprise the plurality of cryptographic keys; and
   associating each of the plurality of cryptographic keys with a respective future time period of a set of future time periods.
Clause 4. The method of clause 2, wherein generating the plurality of cryptographic keys comprises:
   generating a first cryptographic key of the plurality of cryptographic keys;
   providing the generated first cryptographic key as an input to a one-way hashing operation; and
   extracting a second cryptographic key from one or more outputs of the one-way hashing operation.
Clause 5. The method of clause 2, wherein identifying the cryptographic key that is pre-generated for the future time period corresponding to the determined time period comprises:
   determining whether the plurality of cryptographic keys comprises the cryptographic key for the determined time period; and
   responsive to determining that the plurality of cryptographic keys does not comprise the cryptographic key for the determined time period, generating an additional cryptographic key corresponding to the determined time period.
Clause 6. The method of clause 1, wherein determining the time period during which the data item is to be invalidated comprises:
   determining one or more characteristics associated with at least one of the received request or the data item, wherein the one or more characteristics comprise at least one of a data type of the data item, an operation that is to be applied to the data item, a hardware state of a device that provided the request, a software state of the device that provided the request, or a characteristic associated with an account of a user associated with the device that provided the request; and
   identifying, based on the data access protocol, the time period defined for invalidation of the data item based on the determined one or more characteristics.
Clause 7. The method of clause 1, wherein causing the data item to be encrypted using the identified cryptographic key comprises:
   providing the data item of the request and an identifier associated with the data item as an input to an encryption engine; and
   obtaining one or more outputs of the encryption engine, wherein the outputs comprise the encrypted data item and the encrypted identifier associated with the data item.
Clause 8. The method of clause 7, wherein storing the encrypted data item at the data structure comprises:
   updating an entry of the data structure to include a mapping between the encrypted data item and the encrypted identifier associated with the data item.
Clause 9. The method of clause 1, further comprising:
   responsive to determining that the future time period corresponding to the determined time period has expired, erasing the cryptographic key from a memory.
Clause 10. A system comprising:
   a memory; and
   a set of one or more processing devices coupled to the memory, wherein the set of one or more processing devices is to perform operations comprising:
      receiving a request to access a data item associated with a time controlled application;
      determining whether the data item of the request is valid or invalid based on a data access protocol for the time controlled application;
      responsive to determining that the data item of the request is valid, identifying a cryptographic key that corresponds to a future time period during which the data item is to be invalidated;
      retrieving the data item from a data structure of the memory, wherein the data item at the data structure is encrypted based on the identified cryptographic key; and
      providing access to the data item based on the identified cryptographic key in accordance with the received request.
Clause 11. The system of clause 10, wherein the operations further comprise:
   responsive to determining that the data item of the request is invalid, providing a notification to a client device that transmitted the request, the notification indicating that the data item of the request cannot be accessed.
Clause 12. The system of clause 10, wherein determining whether the data item of the request is valid or invalid based on the data access protocol comprises:
   identifying, based on the data access protocol, an expiration time period for the data item, wherein the expiration time period indicates a time period during which the data item is to be inaccessible;
   determining whether a current time period during which the request to access the data item is received matches or is subsequent to the expiration time period; and
   responsive to determining that the current time period matches or is subsequent to the expiration time period, determining that the data item of the request is invalid.
Clause 13. The system of clause 10, wherein providing access to the data item based on the identified cryptographic key comprises:
   decrypting the data item using the identified cryptographic key; and
   providing the decrypted data item to a client device that transmitted the request.
Clause 14. The system of clause 10, wherein providing access to the data item based on the identified cryptographic key comprises:
   providing the encrypted data item retrieved from the data structure to a client device that transmitted the request for decryption by the client device using the identified cryptographic key.
Clause 15. The system of clause 10, wherein retrieving the data item from the data structure comprises:
   determining an index for the data item stored in the data structure based on the identified cryptographic key;
   identifying an entry of the data structure that comprises the data item; and
   extracting the data item from the identified entry.
Clause 16. The system of clause 10, wherein the operations further comprise;
   responsive to determining that the data item is invalid based on the data access protocol, erasing the identified cryptographic key from a memory.
Clause 17. A non-transitory computer readable storage medium comprising instructions for a server that, when executed by a set of one or more processing devices, cause the set of one or more processing devices to perform operations comprising:
   receiving a request to store a data item associated with a time controlled application at a data structure;
   determining a time period during which the data item is to be invalidated based on a data access protocol for the time controlled application;
   identifying a cryptographic key that is pre-generated for a future time period corresponding to the determined time period;
   causing the data item to be encrypted using the identified cryptographic key; and
   storing the encrypted data item at the data structure in accordance with the received request.
Clause 18. The non-transitory computer readable storage medium of clause 17, wherein the operations further comprise:
   prior to receiving the request to store the data item, generating a plurality of cryptographic keys each corresponding to a distinct future time period, wherein the plurality of cryptographic keys includes the identified cryptographic key.
Clause 19. The non-transitory computer readable storage medium of clause 18, wherein generating the plurality of cryptographic keys comprises:
   obtaining one or more outputs of one or more random cryptographic key generator operations, wherein the one or more outputs comprise the plurality of cryptographic keys; and
   associating each of the plurality of cryptographic keys with a respective future time period of a set of future time periods.
Clause 20. The non-transitory computer readable storage medium of clause 18, wherein generating the plurality of cryptographic keys comprises:
   generating a first cryptographic key of the plurality of cryptographic keys;
   providing the generated first cryptographic key as an input to a one-way hashing operation; and
   extracting a second cryptographic key from one or more outputs of the one-way hashing operation.

## Claims

1. A method comprising:
receiving a request to store a data item associated with a time controlled application at a data structure;
determining a time period during which the data item is to be invalidated based on a data access protocol for the time controlled application;
identifying a cryptographic key that is pre-generated for a future time period corresponding to the determined time period;
causing the data item to be encrypted using the identified cryptographic key; and
storing the encrypted data item at the data structure in accordance with the received request.

2. The method of claim 1, further comprising:
prior to receiving the request to store the data item, generating a plurality of cryptographic keys each corresponding to a distinct future time period, wherein the plurality of cryptographic keys includes the identified cryptographic key.

3. The method of claim 2, wherein generating the plurality of cryptographic keys comprises either:
obtaining one or more outputs of one or more random cryptographic key generator operations, wherein the one or more outputs comprise the plurality of cryptographic keys, and
associating each of the plurality of cryptographic keys with a respective future time period of a set of future time periods; and/or
generating a first cryptographic key of the plurality of cryptographic keys,
providing the generated first cryptographic key as an input to a one-way hashing operation, and
extracting a second cryptographic key from one or more outputs of the one-way hashing operation.

4. The method of claim 2 or claim 3, wherein identifying the cryptographic key that is pre-generated for the future time period corresponding to the determined time period comprises:
determining whether the plurality of cryptographic keys comprises the cryptographic key for the determined time period; and
responsive to determining that the plurality of cryptographic keys does not comprise the cryptographic key for the determined time period, generating an additional cryptographic key corresponding to the determined time period.

5. The method of any preceding claim, wherein determining the time period during which the data item is to be invalidated comprises:
determining one or more characteristics associated with at least one of the received request or the data item, wherein the one or more characteristics comprise at least one of a data type of the data item, an operation that is to be applied to the data item, a hardware state of a device that provided the request, a software state of the device that provided the request, or a characteristic associated with an account of a user associated with the device that provided the request; and
identifying, based on the data access protocol, the time period defined for invalidation of the data item based on the determined one or more characteristics.

6. The method of any preceding claim, wherein causing the data item to be encrypted using the identified cryptographic key comprises:
providing the data item of the request and an identifier associated with the data item as an input to an encryption engine; and
obtaining one or more outputs of the encryption engine, wherein the outputs comprise the encrypted data item and the encrypted identifier associated with the data item,
optionally wherein storing the encrypted data item at the data structure comprises:
updating an entry of the data structure to include a mapping between the encrypted data item and the encrypted identifier associated with the data item.

7. The method of any preceding claim, further comprising:
responsive to determining that the future time period corresponding to the determined time period has expired, erasing the cryptographic key from a memory.

8. A system comprising:
a memory; and
a set of one or more processing devices coupled to the memory, wherein the set of one or more processing devices is to perform operations comprising:
receiving a request to access a data item associated with a time controlled application;
determining whether the data item of the request is valid or invalid based on a data access protocol for the time controlled application;
responsive to determining that the data item of the request is valid, identifying a cryptographic key that corresponds to a future time period during which the data item is to be invalidated;
retrieving the data item from a data structure of the memory, wherein the data item at the data structure is encrypted based on the identified cryptographic key; and
providing access to the data item based on the identified cryptographic key in accordance with the received request.

9. The system of claim 8, wherein the operations further comprise:
responsive to determining that the data item of the request is invalid, providing a notification to a client device that transmitted the request, the notification indicating that the data item of the request cannot be accessed; and/or
responsive to determining that the data item is invalid based on the data access protocol, erasing the identified cryptographic key from a memory.

10. The system of claim 8 or 9, wherein determining whether the data item of the request is valid or invalid based on the data access protocol comprises:
identifying, based on the data access protocol, an expiration time period for the data item, wherein the expiration time period indicates a time period during which the data item is to be inaccessible;
determining whether a current time period during which the request to access the data item is received matches or is subsequent to the expiration time period; and
responsive to determining that the current time period matches or is subsequent to the expiration time period, determining that the data item of the request is invalid.

11. The system of any of claims 8-10, wherein providing access to the data item based on the identified cryptographic key comprises either:
decrypting the data item using the identified cryptographic key, and
providing the decrypted data item to a client device that transmitted the request; and/or
providing the encrypted data item retrieved from the data structure to a client device that transmitted the request for decryption by the client device using the identified cryptographic key.

12. The system of any of claims 8-11, wherein retrieving the data item from the data structure comprises:
determining an index for the data item stored in the data structure based on the identified cryptographic key;
identifying an entry of the data structure that comprises the data item; and
extracting the data item from the identified entry.

13. A non-transitory computer readable storage medium comprising instructions for a server that, when executed by a set of one or more processing devices, cause the set of one or more processing devices to perform operations comprising:
receiving a request to store a data item associated with a time controlled application at a data structure;
determining a time period during which the data item is to be invalidated based on a data access protocol for the time controlled application;
identifying a cryptographic key that is pre-generated for a future time period corresponding to the determined time period;
causing the data item to be encrypted using the identified cryptographic key; and
storing the encrypted data item at the data structure in accordance with the received request.

14. The non-transitory computer readable storage medium of claim 13, wherein the operations further comprise:
prior to receiving the request to store the data item, generating a plurality of cryptographic keys each corresponding to a distinct future time period, wherein the plurality of cryptographic keys includes the identified cryptographic key.

15. The non-transitory computer readable storage medium of claim 13 or claim 14, wherein generating the plurality of cryptographic keys comprises either:
obtaining one or more outputs of one or more random cryptographic key generator operations, wherein the one or more outputs comprise the plurality of cryptographic keys, and
associating each of the plurality of cryptographic keys with a respective future time period of a set of future time periods; and/or
generating a first cryptographic key of the plurality of cryptographic keys,
providing the generated first cryptographic key as an input to a one-way hashing operation, and
extracting a second cryptographic key from one or more outputs of the one-way hashing operation.
